# EUROPEAN PATENT APPLICATION

(11) **EP 1 511 330 A1**
(43) Date of publication of application: **02.03.2005**
(21) Application number: 03292093.6
(22) Date of filing: 26.08.2003
(51) Int. Cl.: H04Q 3/00, H04M 3/527, H04M 1/247, H04M 1/57

(54) **Controlling and organizing telecommunication activities**

(71) Applicant: ALCATEL, 75008 Paris (FR)
(72) Inventor: Rössler, Horst, 70794 Filderstadt (DE); Hoche, Dr. Michael Walter, 71701 Schwieberdingen (DE)
(74) Representative: Brose, Gerhard

(57) **Abstract**

The invention relates to a telecommunication assistant (TA) for controlling and organizing telecommunication of a user (A,B), characterized by comprising simulation means for creating a virtual reality comprising a virtual assistant (VAA,VAB) associated to said user (A,B), a user interface enabling the user (A,B) to interact with the virtual assistant (VAA,VAB), and processing means to interpret a user interaction.

## Description

The present invention relates to method for controlling and organizing telecommunication activities. The invention also relates to a telecommunication device, a telecommunication assistant, a telecommunication assistant server, and a computer software product.

Currently there are multiple telecommunication systems and methods available. One representing is described in the US Patent Application No. 6,570,975. There a telecommunication system and method for automatically and seamlessly routing telephone calls across a telephone network is disclosed. The system includes a telephone switch having a computer, a computer, and means to dynamically link these components at routing time to produce a selected client telephone number and transmit the number across the telephone network. The system utilizes automatic number identification to identify the calling party. A master file has a plurality of records having a calling telephone number field and a spatial key field.

The well known and established network connection metaphor is very physical oriented comprising functional components like terminals, switches, lines, Intelligent Network Services, and terminal devices, like IP telephones, personal computers and the like making telecommunication services accessible via identifiers like numbers.

This physical oriented network connection metaphor comprises physical controls e.g. a telephone interface imbedded within and distributed throughout the switch core operating software. There are abstraction layers hiding these interfaces.

Such a telephone abstraction layer and system in a computer telephony system is disclosed in the US Patent Application 6,584,185. There a telephony system is described capable of supporting and properly interfacing with a wide variety of telephones or station sets produced by various manufacturers. This support is enabled through the inclusion of a telephone abstraction layer in the core telephony software that removes the detailed interface to a particular phone common in modern telephony systems. Telephone abstraction drivers for each type of phone receive the abstraction commands and information and translate them into commands and information for proper interfacing, display, signaling, functional assignment, etc. for that type of phone. The information provided from the abstraction layer may be more than the particular phone may be able to display, in which case the telephone abstraction drivers prioritize the information and send only what it deems appropriate to the station set. Alternatively, the telephone abstraction drivers may access a database to extract desired information for display. Customization of the station set personality is also provided by the telephone abstraction drivers, which allows transportability of a user's settings between different phones connected to the system.

Agents is a computer science technology for realizing aware systems. There is a large knowledge about agent technology. A survey providing a impression what this technology enables is "Systems That Know What They're Doing" 12/12/02, Ronald J. Brachman, IEEE Intelligent Systems, v17n6, Nov-Dec 2002. The paper "Agent Technology: Enabling Next Generation Computing", Michael Luck, Peter McBurney, Chris Preist, January 2003, AgentLink, provides a Roadmap for agent based computing and its applications.

Well known are user interfaces providing connection and telecommunication management functionality like connection access via an telephone dictionary, call logging, or service access supported by numerical or menu-like control interface.

The invention is based on another dimension of abstraction concerning virtual reality technology like avatars or multi-user-dungeons. In this context Jung defines a symbol to be "anything that represents more than itself". This concept is at the heart of indexing. Symbolism is the essence of the indexed pointer because it is the mechanism that will allow people of varied modalities to communicate effectively in a simulation space.

A cyberspace is the 'place' where a telephone conversation appears to occur. Not inside the actual phone, the plastic device on the desk. Not inside the other person's phone, in some other city. The place between the phones. The indefinite place out there, where the two of you, human beings, actually meet and communicate. That means cyberspace is a consensual hallucination.

A space has a virtually extension, including so many things that they can never be grasped all at once. This is a good description of the already existing collections of electronic data, on e.g. the Internet. Second, space connotes the idea of free movement, of being able to visit a variety of states or places. Third, a space has some kind of a geometry, implying concepts such as distance, direction and dimension. The most direct implementation of the latter idea is the technology of virtual reality, where a continuous three-dimensional space is generated using a computer, which reacts to the user's movements and manipulations like a real physical space would. In a more metaphorical way, the geometry (or at least topology) of space can be found in the network of links and references characterizing a hypertext (which can be seen as the most general form for a collection of inter-linked data). Nodes in a hypertext can be close or distant, depending on the number of links one must traverse in order to get from the one to the other. Moreover, the set of links in a given node define a number of directions in which one can move. However, a hypertext does not seem to have any determined number of dimensions (except perhaps infinity), it is not continuous but "chunky", and the distance between two points is in general different depending on the point from which one starts to move.

A Multi-User-Dungeon (MUD) or Multi-User-Dungeon Object is a software that accepts 'connections' from multiple users across some kind of network (e.g., telephone lines or the Internet) and provides to each user access to a shared database of 'rooms', 'exits', and other objects. Each user browses and manipulates this database from 'inside' one of those rooms, seeing only those objects that are in the same room and moving from room to room mostly via the exits that connect them. A MUD, therefore, is a kind of virtual reality, an electronically-represented 'place' that users can visit. MUDs are not, however, like the kinds of virtual realities that one usually hears about, with fancy graphics and special hardware to sense the position and orientation of the user's real-world body. Current MUD user's interface to the database is entirely text-based; all commands are typed in by the users and all feedback is printed as unformatted text on their terminal.

Telecommunication services are offered by symbols like telephone numbers, prefixes etc. and identifiers like CLIR, etc. The problem to be solved by this invention is a to provide a presentation of functional features of a telecommunication network to a telecommunication end-user or a telecommunication service designer that is abstracting from the established hardware oriented network metaphor.

This problem is solved by a method for controlling and organizing telecommunication activities comprising the steps of listening on a telecommunication service selection and providing a selected telecommunication service, and invoking telecommunication service by a virtual assistant associated to a telecommunication user.

The problem is further solved by a telecommunication device comprising control means for controlling and organizing telecommunication device activities, further comprising a telecommunication assistant for a telecommunication user, the telecommunication assistant comprising simulation means for creating a virtual reality comprising a virtual assistant associated to said user, access means for instructing said control means, a user interface enabling the user to interact with the virtual assistant, and processing means to interpret a user interaction.

And the problem is solved by a telecommunication assistant for controlling and organizing telecommunication of a user comprising simulation means for creating a virtual reality comprising a virtual assistant associated to said user, access means for instructing said control means, a user interface enabling the user to interact with the virtual assistant, and processing means to interpret a user interaction.

The problem is solved inter alia by a server in a telecommunication system, comprising such a telecommunication assistant that provides the telecommunication assistant's functionality as a telecommunication service.

And the problem is solved by a computer software product implementing such an telecommunication assistant.

Accordingly, it is an advantage of the present invention to provide a user friendly and intuitive interface for an end user to access services that is not based on a hardware metaphor. Furthermore the underlying model is extensional oriented i.e. infrastructure oriented, but intentional, i.e. user demand oriented.

Another advantage of the present invention is to enhance and accelerate the design and deployment telecommunication services by e.g. enabling simple service integration and interoperation in an telecommunication assistant's context. The invention simplifies service creation due to the infrastructure independence

A further advantage of the present invention is that it simplifies telecommunication management and offers the new range of novel telecommunication services, e.g. appointment services.

Yet another advantage of the present invention is that it provides an advanced form of location independence. A user's tele-presence is enhanced by the presence of an intelligent synthetic secretary acting in place of its associated user.

These and many other objects and advantages of the present invention will become apparent to those of ordinary skill in the art from a consideration of the drawings and ensuing description where
Figure. 1 is a schematic drawing of a prior art telecommunication system.
Figure. 2 is a schematic drawing of a prior art message sequence chart of a prior art telecommunication system.
Figure. 3 is a schematic drawing of a telecommunication system comprising a telecommunication agent according to the invention.
Figure. 4 is a schematic drawing of message sequence chart of a telecommunication system comprising a telecommunication agent according to the invention.
Figure. 5 is a illustration of the usage of a telecommunication agent according to the invention.
Figure 6 shows an example architecture of a telecommunication agent according to the invention.

The invention concerns a virtual instance as communication metaphor. An artificial tele-buddy is proposed as representative symbol for the user or as representative symbol of an assistant of the user.

The presentation of such a tele-buddy might be by an avatar, a (synthetic) voice, or even complete virtual (simulated) person. This presentation is dependent on the communication medium. The tele-buddy or virtual assistant is an illusion of the communicating party caused by corresponding interactions of the telecommunication assistant using the available infrastructure.

A telecommunication assistant might be realized as a (personalized) agent that has to react like a secretary on behalf of its associated user. That means the agent might prepare a service invocation like the arrangement of a telephone conference or a meeting, or the agent could act in place of its associated user.

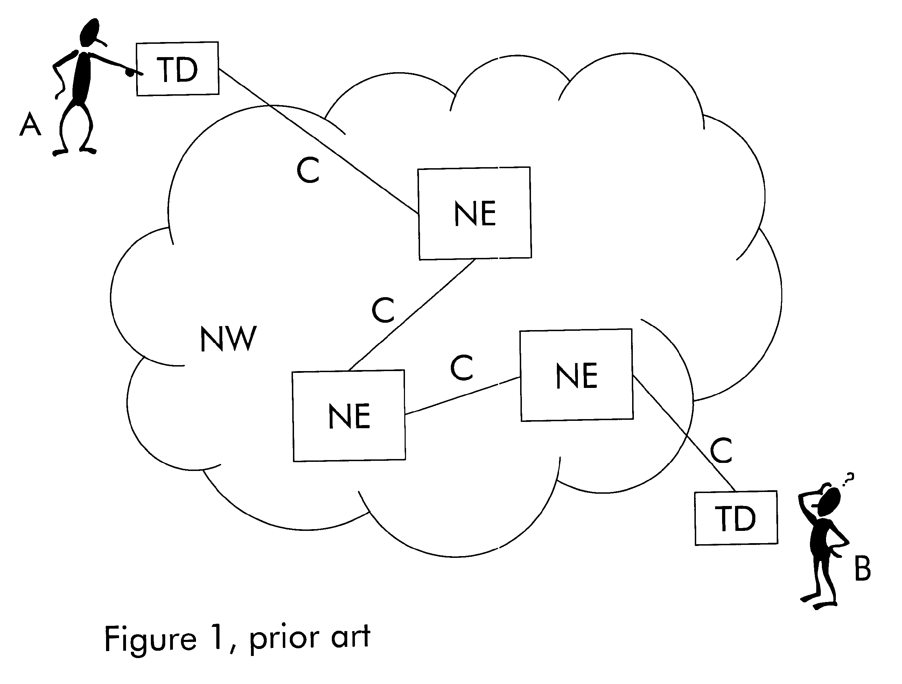

Figure. 1 shows the prior art telecommunication context. One party A uses a telecommunication device TD that is connected with a network NW to contact another party B, that also has a similar telecommunication device TD. A connection C - either a continuous like a standard telephone link or an non-continuous information exchange path like an e-mail transmission using send mail transfer protocol - is established via several network elements NE in the network, e.g. routers, switches, hubs, access servers, etc. Via this connection C an information exchange, i.e. communication, is enabled.

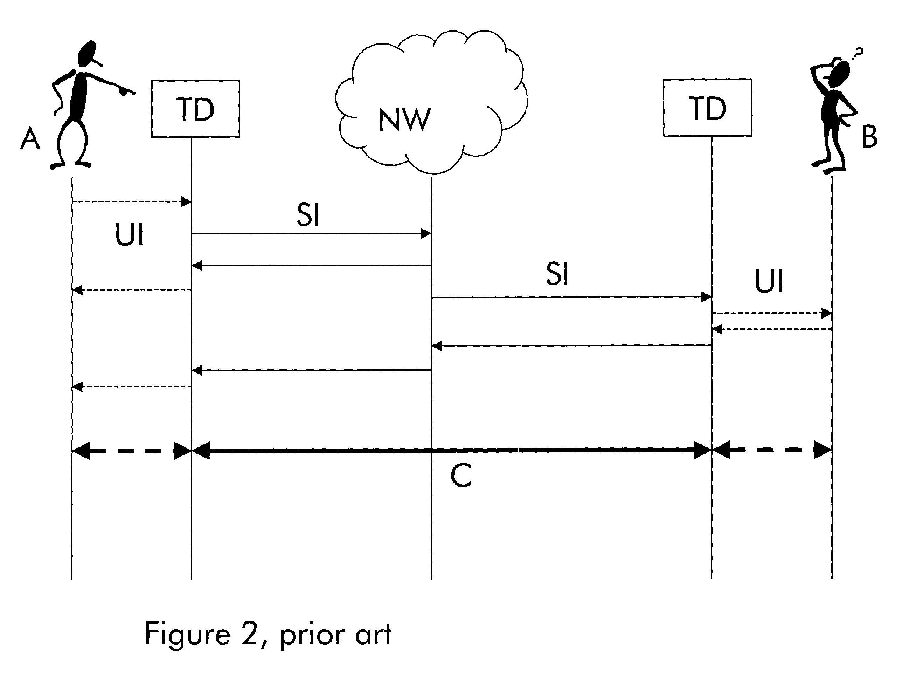

Figure. 2 shows a message sequence chart illustrating a prior art connection set-up. The diagram comprises also the one party A, the two communication devices TD, the network NW, and the other party B.

The one party A intends to set-up a call. Using a telephone telecommunication device this requires a user interaction UI, i.e. dialing the number of the other party B. The number is signaled SI to the network NW, the network informs the other party's B telecommunication device TD, e.g. also a telephone. The telephone informs its user, the other party B, by a further user interaction UI. The other party B reacts, e.g. by accepting the call. Meanwhile the network signals the telecommunication device TD of the one party A that it tries to perform the requested communication, e.g. by a signaling tone. This ping pong game goes on until the (audio) connection C is set up between the devices and the users of the devices, the one party A and the other party B are 'on-line'.

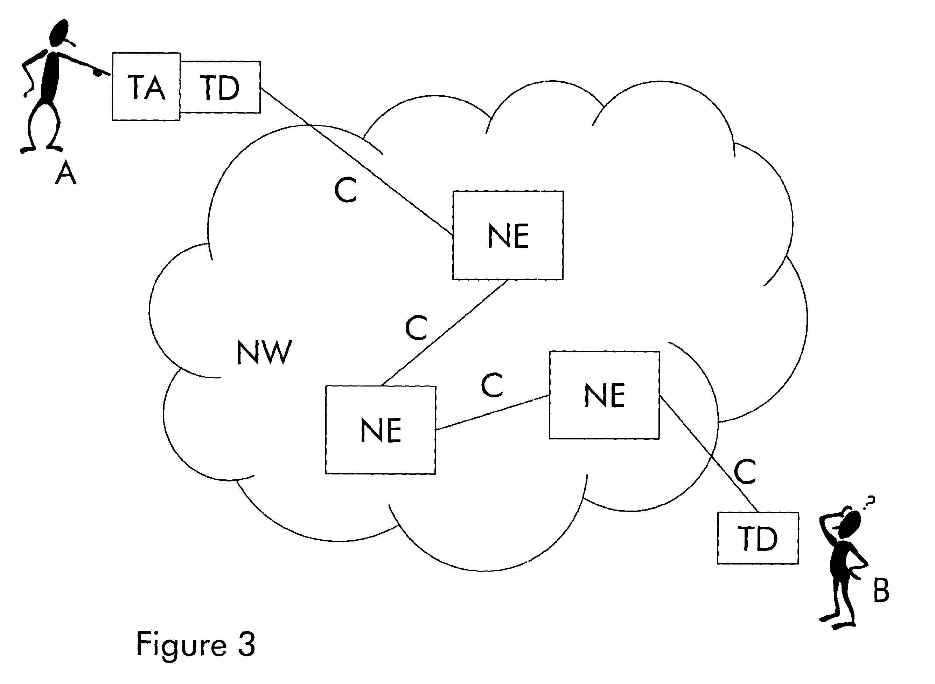

Figure. 3 shows the where the telecommunication assistant TA is integrated in the prior art telecommunication context shown in figure 1. It is placed between a representative party A and the telecommunication device TD of this party A.

The telecommunication agent TA has two boundaries the party A, its associated user, and the telecommunication device TD. The first boundary has to support a user friendly intention oriented interface allowing a user to delegate and define tasks like call setups, conference calls, meeting appointments, researches, investigations, negotiations etc. The second boundary has to interact with the telecommunication network infrastructure NE, NW, C, TD to perform the defined and delegated tasks. Furthermore the boundary has to cope with network side interaction. The network NW, another telecommunication agent or a calling party B might communicate to the telecommunication agent via this boundary and the telecommunication agent TA has to react and interact accordingly.

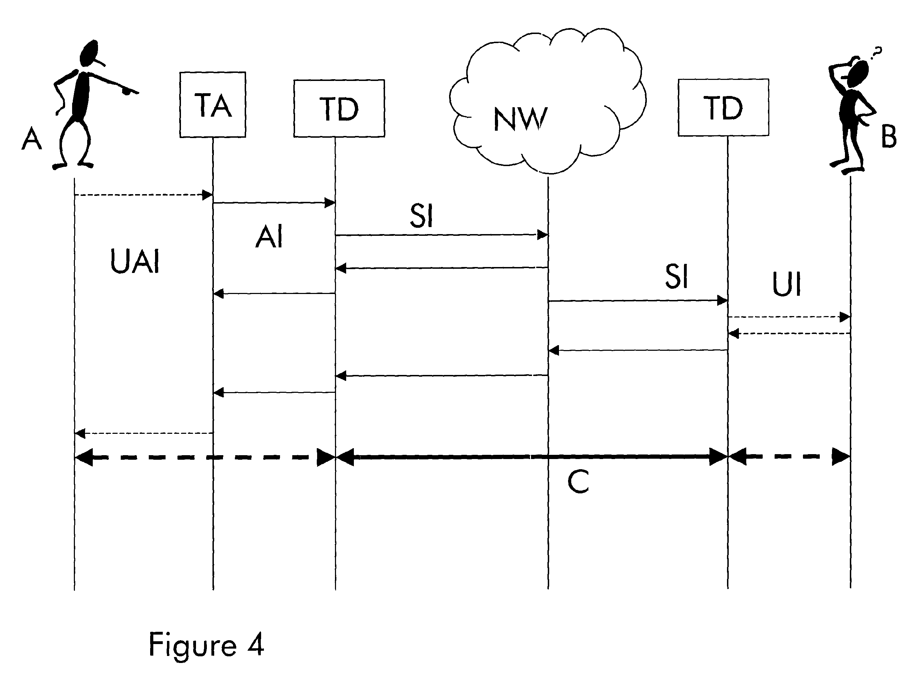

Figure. 4 shows the extended message sequence chart illustrating the prior art connection set-up shown in figure 2. The diagram comprises also the one party A, the two communication devices TD, the network NW, the other party B, and the telecommunication agent TA.

The one party A now interacts only with the telecommunication assistant TA by a user-assistant interaction UAI. The telecommunication assistant TA takes now the role of the one party A shown in figure 1. When the delegated task is done, i.e. the connection is established, the telecommunication agent TA informs its user by a user-assistant interaction UAI and the user's can communicate via the (audio) connection C.

There might be the following scenarios: When the user intends to contact someone, the associated assistant manages the infrastructure things, i.e. establishing the telecommunication link(s) i.e. the meeting and informs the user about success or failure. The establishing phase might comprise the invocation of the someone's associated assistant for arrange the telecommunication meeting. The failure could be caught automatically by the assistant e.g. by switching to an asynchronous telecommunication media like short message service or e-mail, or by making an appointment for the telecommunication meeting.

Analogous the assistant could prepare any other service invocation, e.g. a telecommunication assistants could arrange a telephone conference among multiple parties e.g. by contacting the parties or their associated telecommunication assistants and negotiating the conferencing.

When a user is requested for participating on a telecommunication meeting his assistant is informed and will provide the necessary actions. If the user to be contacted is busy or if the communication request can be re-solved by the to be contacted user's agent, e.g. a date for a meeting appointment etc., the assistant could itself solve the request and inform user latter like an intelligent telephone answering machine.

When the user becomes 'on line' or 'off-hook', i.e. present or available, the assistant could present the collected activities and the open appointments that were made in absence of the master.

The assistant acts on behalf of its associated user, i.e. it simulated the users telecommunication behavior according to the user's preferences, maintains a telecommunication history, acts on behalf of the user, and even provide a virtual presence to communication partners.

It is advantageous to combine multiple information flows by one assistant, e.g. e-mail, telephone, video conference etc. in order to align communication media, paths, and organization of a user and to simplify communication handling.

Another aspect of communication might be a topic centric partition of communication, e.g. the telecommunication assistant becomes aware of the topic of the communication and provides its master a topic centric access. An example task might be "find a close communication partner sharing my interest in agent technology and establish a connection".

To realize the telecommunication agent the idea is to use the awareness property of agents for realizing telecommunication agents, to support a task delegation oriented - intentional - user interface that is intelligent and aware of the users wishes. The negotiation capabilities of agents are advantageous when communicating with other entities like other agents or even other users. The awareness property of agents has the further advantage that it could be used to adapt, translate, match, or map the network services and capabilities onto the users needs and wishes. Therefore the agent requires certain world knowledge which could for instance be modeled using artificial intelligence methods like a KI shell.

The virtual presence is supported by knowledge about the telecommunication assistant's associated user, i.e. its master. This enables the telecommunication assistant performing telecommunication routine jobs by providing a simple, user friendly, and usage oriented interface via a communication infrastructure to other parties. The virtual presence might even reflect the user knowledge using mimic, gesture, nature, intonation, appearance, etc.

The agent couid have Knowiedge about the communication infrastructure, i.e. the media like e-mail, voice, video, etc. and how to use the media, i.e. service invocation, signaling, virtual presence (assistant or tele-buddy) emulation etc. for causing a (perfect) illusion at the B party site. This knowledge could also be used to negotiate a communication, e.g. between two agents whether there is a video conference necessary or a telephone conference is sufficient.

This emulation is supported by awareness about the master, e.g. the masters preferences and habits, the masters intentions, mood, availability or presence, the masters personal calendar, the masters communication tasks and parties, the masters appointments etc.

It is advantageous to present this kind of information using artificial intelligence (Al) technology, e.g. by a semantic network in Prolog or an Al shell using defining a complex system of interaction rules.

The interface to the one party A, i.e. the user of the telecommunication assistant TA presents abstractions of the functional features of the telecommunication network system. The telecommunication assistant associated to the telecommunication user , i.e. the agent, is required to control and organizing the user's telecommunication activities. That means the agent has to cause the illusion of an ergonomic user interface that allows to delegate (secretary) tasks like a conference or meeting set up, and to communicate multi-modal in a cyber space. The agent that hides the functional plain interactions noise with the telecommunication infra structure via an abstraction that provides an intelligent interpretation of the users wishes and a translation into control of the telecommunication infrastructure.

Experiments showed that this suppressed noise enhances telecommunication because a user is enabled to concentrate on the communication content instead of dialing telephone numbers, making appointments, seeking form numbers, retrieving information about the communication partner etc.

How does noise effect information? Information is a measure of ones freedom of choice in selecting a message. The greater the information, the greater is the uncertainty that the message actually selected is some particular one. Thus greater freedom of choice, greater uncertainty, greater information go hand in hand. If noise is introduced, then the received message contains certain distortions, certain errors, certain extraneous material, that would certainly lead one to say that the received message exhibits, because of the effects of noise, an increased uncertainty. But if the uncertainty is increased, the information is increased, and this sounds as though the noise were beneficial. But it is not. Indeed tools are required that reduce the uncertainty and to manage the freedom of choice.

This effect could be observed within several communication media: e-mail - spam filters, address books, mobile phones - voice control interfaces, Internet web sites - search engines, customizable browsers etc.

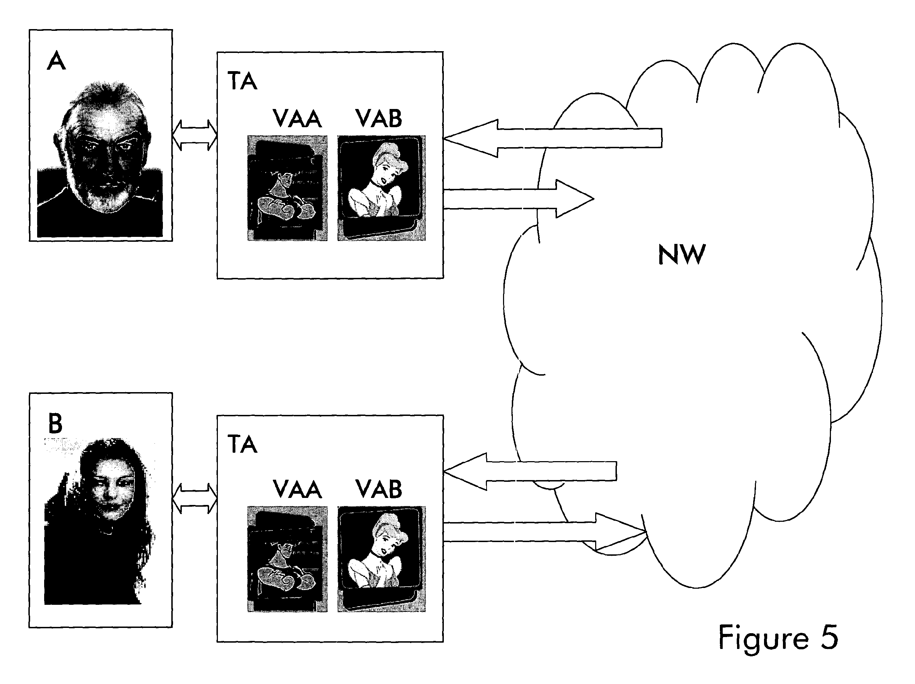

Figure. 5 illustrates of the usage of a telecommunication assistant TA according to the invention. Two users A and B each having an telecommunication assistant TA communication via the telecommunication assistant - on a user's perspective. The telecommunication assistant TA uses the network NW capabilities to fulfill the users' demands and at the same time hides the network capabilities from the users. This allows to de-couple interaction modalities of the user and the network.

For instance one user might prefer to use a designative drag-and-drop interaction to establish a telephone call. Then this user simply drags the symbol (icon) of the other party where he wants to speech with over a audio symbol. The agent negotiates the connection with the other agent and will inform its user when the communication could be established etc. The second user might prefer a video connection but in the way that the agents simulate the video connection using corresponding virtual entities VAA and VAB, e.g. avatars. The telecommunication agent might reflect the mood of the user on the avatars.

Another user prefers to use speech directives that are interpreted by the assistant's logic.

The effect is the users' mind has a kind of cyber space impression within a real communication forming a virtual community. Cyberspace, like mind, is not in physical space, but in virtual space, without extension, distance, or mass. The point is that thoughts and feelings, which form the content and substance of mind, are not in physical space as they are not physical objects. Hence mind is not a physical object in time and space, and thus communication infrastructure requires a mediating device, preferably simulating an ergonomic cyberspace than only stimulating user's senses.

Similarly, virtual reality has no physical form or mass. The brain is needed within which mind can exist, or through which it can act in the physical world. The hard drive is needed within which cyberspace can exist, or through which cyberspace is reached and navigated. But the size of the brain is not related to the size or content of the mind. The size of the hard drive is not related to the size or content of cyberspace. Virtual reality is created by interactivity - its number, direction, and type. On the Web, the simplest form of interactivity is a click-able title or word called a hyperlink (or just link), that has the power to whisk you off to another corner of cyberspace. Other methods of accessing text and multimedia on the Internet include search engines, organized directories or databases, archived discussion group files, newsgroups, online chat groups and conferences, and e-mail delivered listservs and subscription services. Later developments include dynamic pages that compose personal elements tailored made to the visitor on the basis of prior registration and identifiers such cookies and search queries. e-Commerce and digital signatures are current example cyberspace activities that are expanding rapidly.

Intelligent robots, software, agents, and electronic assistants are also coming soon, as are in-car communication systems. Additionally, new ways of bringing the "invisible Web" to people are being developed for the massive amount and variety of databases available online that are not part of the current Web search engine territory.

It is clear that these varieties of networked activities vastly increase the number of interpersonal interactions giving no credence to the idea that spending time on the computer is not spending time with humans. Online communication is marked by its high frequency of exchange.

Face to face relationships are built on attraction or mutual interest. At work, one interact with the people with whom need to have transactions. Off work, one strive to see people whom find attractive or interesting more than others.

Telecommunication cyberspace is a virtual reality that facilitates communication and encourages the formation of real communities. One participate in activities with others who want to share a specific interest, need, or pleasure.

Cyberspace is like mind in two important respects - interactivity and organization. Minds interact through organized content. That is, our mind communicates with other minds and the content of the exchange is organized by topic and by attitudes towards the topic. Cyberspace is made up of topics and access doors to these topics and topics create zones of networked interactions.

This invention connotes the gluing and mediating between real telecommunication infrastructure and the idea of cyberspaces.

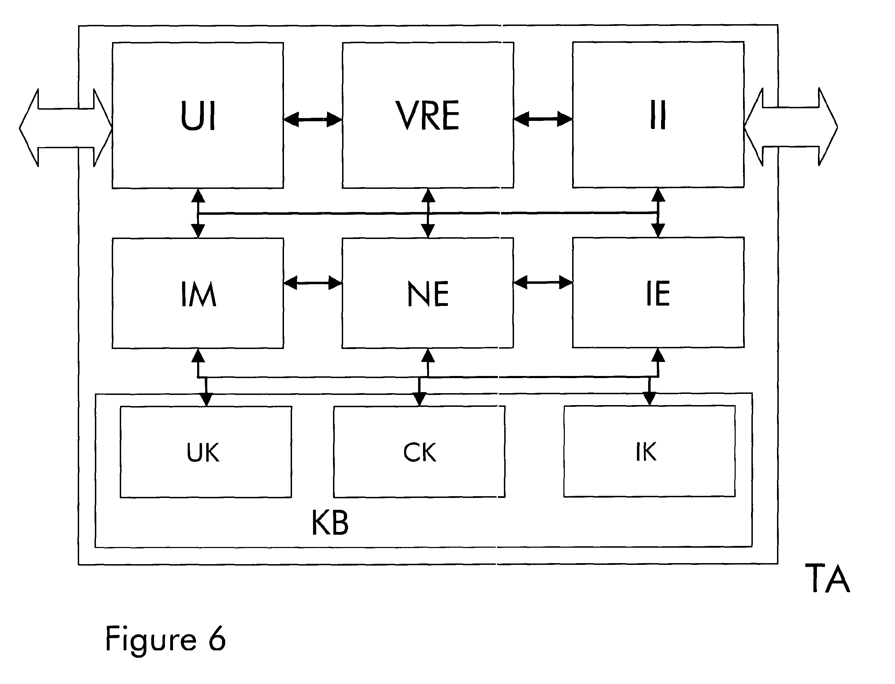

Figure 6 shows a prototypical coarse architecture of a telecommunication agent according to the invention. The telecommunication agent TA has two boundaries, a user interface UI, an infrastructure interface II. The telecommunication agent TA comprises further a knowledge base KB representing the assistants the world knowledge. In the example it is categorized in infrastructure knowledge IK, user knowledge UK, and communication knowledge CK. To enable the assistants interactivity there is a inferenz machine IM, and three specialized engine, a virtual reality engine VRE, a negotiator NE, and a investigator IE.

The user interface UI could be realized using an interactive multimodal interface like a voice graphic interface known from an PR with audio commands. The usual interaction metaphors could be reused e.g. icons or menus for choosing special modes and services. Recognition mechanisms like voice recognition or designation recognition (gesture and shape extraction) could be used to interpret the masters wishes, commands, mood, and communication content. In the other direction the assistant could stipulate this interface in order to produce the virtual reality that is generated by the virtual reality engine VRE.

The virtual reality engine VRE could create a model of the communication e.g. by using abstract presentation methods like the one worked out in the MIT Project "Information Architecture - shaping knowledge into form". Another approach would be to use synthetic avatars even with synthetic voices etc.) for presenting the communication. Such a 3d Avatar systems with mimic and gestures as a conversational user interface is known from the publication "Avatar Gestures" by Thomas Rieger, developed at the Technische Universität Darmstadt, Interactive Graphics Systems Group, 3D Graphics Computing Department. It is advantageous when the virtual reality space is distributed among communicating telecommunication agents such that each assistant has its own space perspective, segment, or part.

The knowledge base KB is used for presenting user knowledge, e.g. preferences for media, communication partners, importance, presence, capabilities, interest, i.e. information that enables the assistant to perform a preferred action when a certain condition arises.

Such preferred action could be
In absence, represent me as busy, record communication and
forward a message about the communication to my mobile. This rule requires knowledge about the presence of the user and the presentation of a mood when the user is busy.

Because of the multiple combinations of reactive behavior an preferable rule based inference mechanism IE is used. This could for instance be a resolution based prolog machine. The inference machine IM has to evaluate rules like the above one as well as (partially) communication content received from the both interfaces II and UI in order to assert or extend the knowledge base and to control the virtual reality engine, the interfaces II and UI and the specialized engines NE and IE.

Therefore the machine requires knowledge about the communication which is designed as the communication knowledge CK and the infrastructure knowledge IK.

The separation of the specialized engines and the knowledge bases reflects the two domains: infrastructure, i.e. media, signaling, protocol, ratability, availability, etc. and communication, i.e. communication content interpretation, understanding, emulation, context and content specific reaction and interaction, communication organization, etc.

A simple but illustrative scenario is a telephone call is received, the assistant identifies the media, generates accordingly an virtual presentation, greets the caller, identifies the caller, offers on e.g. the identified users interest to forward the call or to record the call or to make an appointment about an later callback and the assistant could shortly inform the user about the conversation by selecting the media and messaging a resume.

Another scenario might be the reactivity on an received e-mail concerning an topic of high interest to the user. Then the agent could inform the user pro-actively e.g. by calling him using presence information, e.g. first on his mobile, then on known appointment coordinates using fixed communication infrastructure, e.g. a telephone or an communication agent of a communication partner.

A base technology for such an intelligent device is a technology that is able to collect knowledge. Techniques that support this is for instance be developed at the MIT project "Agent-based Intelligent Reactive Environments" where certain implementation examples are provided.

For the infra structure knowledge a simple prolog assert or a more efficient version LISP for hashing interface functions in order to gather infrastructure functionality:

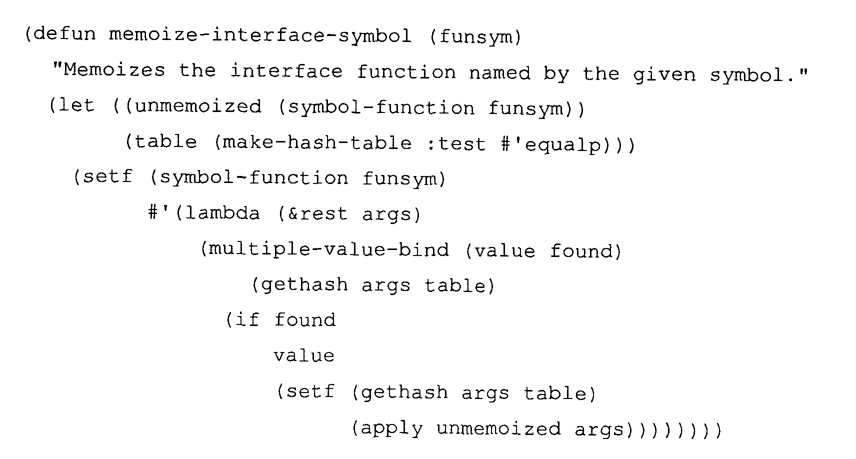

## Claims

1. A method for controlling and organizing telecommunication activities comprising the steps of listening on a telecommunication service selection and providing a selected telecommunication service by an telecommunication assistant (TA), **characterized by** comprising the further step of invoking telecommunication service by a virtual assistant (VAA, VAB) associated to a user (A, B).

2. The method according to claim 1, **characterized by** invoking a telecommunication service by a virtual assistant (VAA, VAB) autonomously on behalf of its associated user (A, B) for a user-defined set of tasks.

3. The method according to claim 1, **characterized by** invoking a telecommunication service by a virtual assistant (VAA, VAB) by representing and acting in place of its associated user (A, B).

4. A telecommunication device (TD) comprising control means for controlling and organizing telecommunication device activities, **characterized by** further comprising a telecommunication assistant for a user (A, B), the telecommunication assistant comprising simulation means for creating a virtual reality comprising a virtual assistant (VAA, VAB) associated to said user (A, B), access means for instructing said control means, a user interface enabling the user (A, B) to interact with the virtual assistant (VAA, VAB), and processing means to interpret a user interaction.

5. The telecommunication device (TD) according to claim 4, **characterized in that** the telecommunication assistant (TA) comprising further processing means enabling the virtual assistant (VAA, VAB) invoking a telecommunication service autonomously on behalf of its associated user (A, B) for a user-defined set of tasks.

6. The telecommunication device (TD) according to claim 4, **characterized in that** the telecommunication assistant (TA) comprising further processing means enabling the virtual assistant (VAA, VAB) invoking a telecommunication service by a virtual assistant (VAA, VAB) by representing and acting in place of its associated user (A, B).

7. A telecommunication assistant (TA) for controlling and organizing telecommunication of a user (A,B), **characterized by** comprising simulation means for creating a virtual reality comprising a virtual assistant (VAA, VAB) associated to said user (A, B), access means for instructing said control means, a user interface enabling the user (A, B) to interact with the virtual assistant (VAA, VAB), and processing means to interpret a user interaction.

8. The telecommunication assistant (TA) according to claim 7, **characterized by** further comprising processing means enabling the virtual assistant (VAA, VAB) invoking a telecommunication service autonomously on behalf of its associated user (A, B) for a user-defined set of tasks.

9. The telecommunication assistant (TA) according to claim 7, **characterized by** further comprising further processing means enabling the virtual assistant (VAA, VAB) invoking a telecommunication service by a virtual assistant (VAA, VAB) by representing and acting in place of its associated user (A, B).

10. The telecommunication assistant (TA) according to claim 7, **characterized by** comprising interface means to another telecommunication assistant.

11. A server in a telecommunication system (NW), **characterized by** comprising a telecommunication assistant (TA) according to claim 7 and providing the telecommunication assistant's functionality as a telecommunication service.

12. A computer software product comprising programming means, **characterized in that** said programming means are formed to perform the method according claim 1.
